(19) Europäisches Patentamt
European Patent Office
Office européen des brevets

(11) EP 1 176 751 A1

(12) EUROPEAN PATENT APPLICATION

(43) Date of publication:
30.01.2002 Bulletin 2002/05

(51) Int Cl.⁷: H04L 7/00, H04B 10/17

(21) Application number: 00402145.7

(22) Date of filing: 27.07.2000

(84) Designated Contracting States:
AT BE CH CY DE DK ES FI FR GB GR IE IT LI LU MC NL PT SE
Designated Extension States:
AL LT LV MK RO SI

(71) Applicant: ALCATEL
75008 Paris (FR)

(72) Inventors:
• Neddam, Frédéric
  93100 Montreuil (FR)

• Le Lourec, Patrice
  91300 Massy (FR)
• Brindel, Patrick
  91310 Longpont S/orge (FR)

(74) Representative: Lamoureux, Bernard et al
COMPAGNIE FINANCIERE ALCATEL Dépt.
Propriété industrielle 30, avenue Kléber
75116 Paris (FR)

(54) **Synchronizer for RZ-WDM signals and method for synchronisation**

(57) The invention is related to a synchronizer for more than one optical RZ signal in a wavelength multiplex transmission system comprising at least one variable delay line (1) with an input receiving RZ-WDM optical channels (2), at least one delay controller (3) receiving the RZ-WDM output optical channels (10), the delay controller generating a control signal depending on the power of the RZ-WDM output optical channels (10) and a control circuit (9) to control the at least one delay line (1) in such a way that the optical WDM channels are synchronized.

FIG 2

## Description

FIELD OF INVENTION

The present invention relates to a synchronizer for RZ (Return to Zero) modulated WDM (wavelength division multiplex) signals.

The invention also relates to a method to synchronize the RZ-WDM signals with the help of a variable delay line and an electronical feedback loop.

Background of the Invention

Demand for broadband services (such as high quality data transfer, high definition television and video conferencing) may require telecommunications networks to operate with TBit/s capacities by the first decade of the next century. In order to meet this capacity demand, all-optical or "transparent" networks have been proposed, which networks employ either high speed optical time division multiplexing (OTDM) or wavelength division multiplexing (WDM) to attain the high data-rate. The transparent optical networks rely on optical switching and routing to maintain a transparent path between the source and destination nodes.

In transmission systems, electronic clock recovery circuits are generally used, conventional techniques using electronic filtering in the post detection circuitry. For instance, a high Q electrical filter may be used to extract the clock component in a received data modulation spectrum.

Within transparent optical network architectures, electronic clock recovery techniques are well know. Using a WDM transmission scheme a large number of independent wavelength channels are transmitted. Each channel is modulated independently from the adjacent channels. The channels are not or only at the transmitters synchronized to each others. The regeneration function during a transmission line includes a re-modulator. If the channels are not synchronized at the regeneration stage the number of regenerators is equal to the number of channels at each regeneration stage.

In return-to-zero (RZ) coding, the frequency spectrum of a coded signal will include a strong peak at the clock frequency. Clock extraction can then be achieved by filtering at the clock frequency and rectifying the result. This involves signal conversion to electronic form. Afterward the clock signals are synchronized by using a phase comparing function. This solution is limited to lower bit rates or increase costs for the requested electronic circuit.

A regeneration and synchronization is know from the US 6,028,898. The signal regenerator comprises a threshold adjustment circuit;a phase adjustment circuit and a re-timing circuit .

Otherwise a complete clock recovery of all RZ-WDM signals is not needed in every regeneration stage of a transmission line.

So the invention is to synchronize the WDM channels in an easy way, without a clock recovery in each channel.

The invention is realized in A synchronizer for more than one optical RZ signal in a wavelength multiplex transmission system comprising

- at least one variable delay line (1) with an input receiving RZ-WDM optical channels (2)

- at least one delay controller (3) receiving the RZ-WDM output optical channels (10)

- the delay controller generating a control signal depending on the power of the RZ-WDM output optical channels (10) and

- a control circuit (9) to control the at least one delay line (1) in such a way that the optical WDM channels are synchronized.

The invention comprises also a method for synchronization of RZ-WDM optical signals realized by the steps:

- Separating two channels from the WDM multiplex

- Synchronizing them by

- Analyzing the power of the two channels

- Generating a control signal for the variable delay line

- Controlling the delay line

- And feeding the resulting synchronized signals back to the next subset of channels so that the synchronized channels are one of the two channels of the subset.

BRIEF DESCRIPTION OF THE DRAWINGS

A synchronizer will now be described as an example of an embodiment of the present invention, with reference to the accompanying drawings, in which:

FIG. 1 shows channel power over time

FIG. 2 shows a principle structure of the synchronizer

FIG. 3 shows a first embodiment of the synchronizer

FIG. 4 shows a second embodiment of the synchronizer.

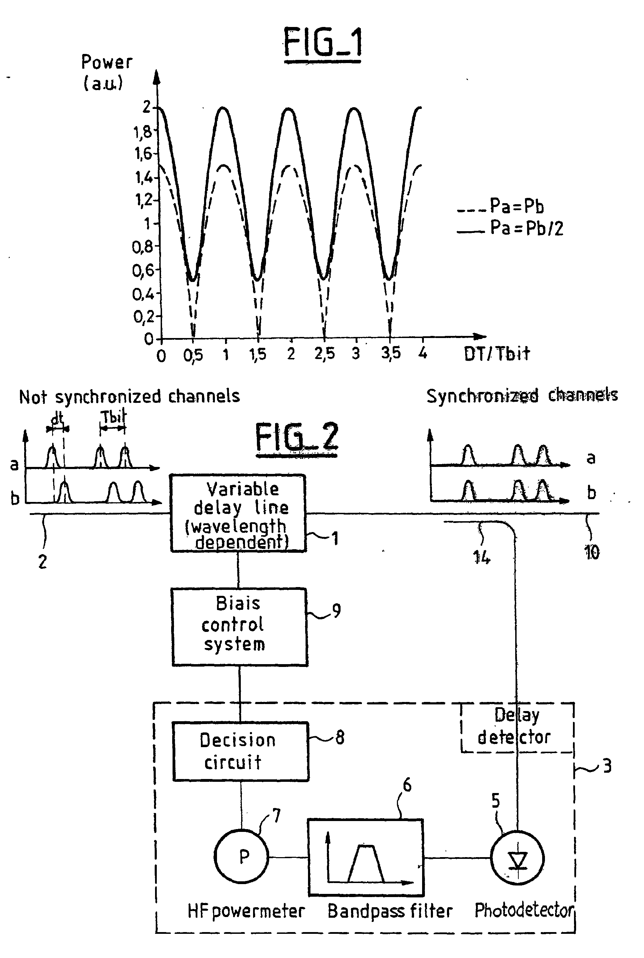

Fig. 1 shows the function of the resulting power of two WDM channels over a certain delay DT.

To understand the dependence of this function we consider two WDM channels modulated in RZ Signals. This optical RZ-WDM channels are named a and b. The two channels are shifted in time by a time period of DT measured in Tbit. The modulation rate for this two channels is (1/Tbit) bit/s. With this modulation scheme the two channels a and b both have a component at (1/Tbit) Hz in their electrical spectrum of power Pa and Pb. If the channels a and b are simultaneously detected in a photo detector it can be shown that the power of the component at the frequency (1/Tbit) Hz in the electrical spectra of the optical sum of two incoherent channels follows the function:

$$P = \sqrt{(P_a - P_b)^2 + 4P_aP_b \cdot \cos^2(\frac{\pi * DT}{T_{Bit}})}$$

If Pa= Pb the relation is:

$$P = 2P_a \left| \cos(\frac{\pi * DT}{T_{Bit}}) \right|$$

It can be seen that the power P of the electrical component at frequency (1/Tbit) Hz of the optical sum of the two channels is maximal when the pulsed of both channels are synchronized and that P is minimal when the pulsed of both channels are out of synchronization.

Fig. 2 shows in a schematic way the synchronizer for two optical channels a and b. The optical RZ-WDM channels 2 are connected with a first port of a variable delay line 1. The output of the a variable delay line 1 is connected to a transmission line for the synchronized RZ-WDM channels 10. A tap 14 splits optical power and is connected to a delay detector 3. The delay detector 3 is attached to a control system 9 and this control system 9 is attached to a second input port of the variable delay line 1. The delay detector 3 consists of a photo detector 5 connected to the input and the tap 14. The photo detector is linked to a band pass filter 6 which is linked to a HF-powermeter 7. The powermeter 7 is attached to a decision circuit 8 and the output connected to the control system 9.

The input RZ WDM channels 2 are not synchronized The shift between the two wavelength channels is DT. The distance between the digital signals for example the signals "1" in the figure is $T_{bit}$. This signals are fed to the variable delay line. What is need is a control signal to initiate the active shift of one channel compared to the other. At the tap 14 a part of the optical signal, that is not influenced by the delay line in the start of the procedure, is taken to feed the delay detector. Herein the photo detector receives the optical signal changing it in an electrical broadband signal. This electrical signal is then filtered by a band pass filter centered around the data clock frequency to delete side band and noise signals. The filtered signal is analyzed by a HF power meter.

This power meter (it could be a RF detection diodes) sensitive to the RF clock level converts the HF signal to a DC electrical level compatible with the so-called decision element 8. The decision element could be realized using electronic enslavement based on operational amplifiers circuitry and transforms the received information in a signal compatible with the variable optical delay line control system 9. A deviation from the maximum RF level is detected in the decision circuit as an error voltage which is lowered using a P.I.D. regulation technique (Proportional, Integral, Derivative) driving the control system.

For this embodiment the variable delay line is wavelength dependent.

In another embodiment the decision circuit look for the minima of the signals . The signal structure is also flexible.

The optical delay line could be an adjustable air gap electrically controlled with a step-motor to change the optical path.

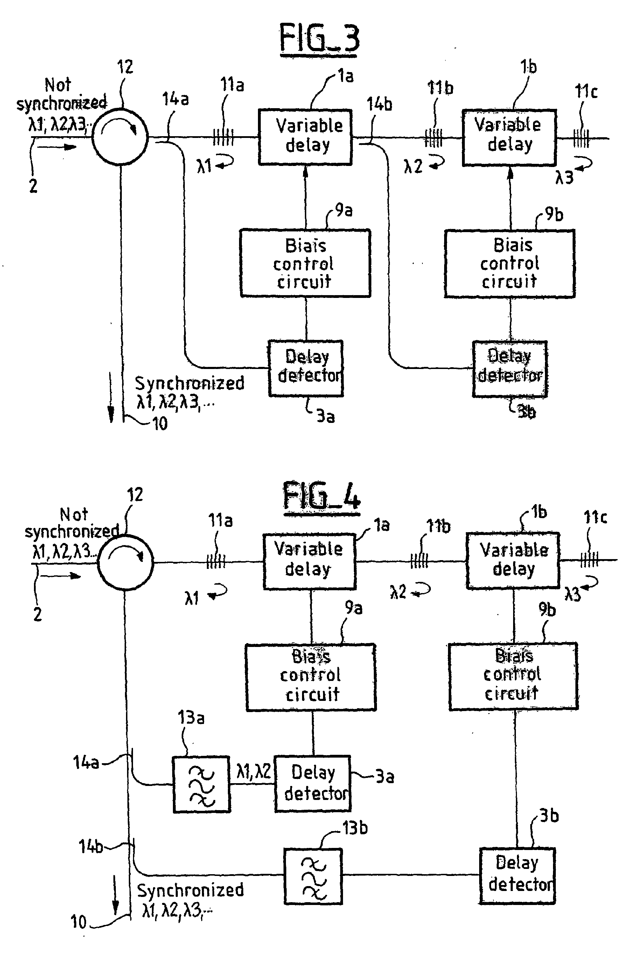

Fig. 3 shows an embodiment of the invention for more than 2 channels. The explanation uses three channels without limiting the scope of the invention.

The input RZ-WDM channels 2 are connected to a circulator 12. The first port of the circulator 12 is connected with a first tap 14a. The tap 14a is also link over a first fiber grating 11a to a first variable delay line 1a. The output of the delay line 1a is over a second tap 14b and a second grating filter 11b connected to a second delay line 1b

The second delay line is linked to a third grating filter 14c.

Each tap 14a and 14b is attached over a delay detector 3a, 3b and a control circuit 9a, 9b with an input port of a delay line 1a, 1b.

The fiber gratings 11 are reflecting one wavelength of the WDM scheme. The fiber grating 11c is reflecting λ3. So in the variable delay line 1b λ3 and λ2 are compared and synchronized. For the two channels are then synchronized the variable delay line 1a shift λ3=λ2 versus λ1. The resulting synchronized signal is fed in the circulator 12 and transmitted over a second port of the circulator 12.

With this embodiment the RZWDM channels are synchronized beginning with channel N. Than channel N and (N-1) are synchronized , than channel N-2 with the synchronized channels N and N-1 and finally the channel 1 is synchronized with the already synchronized channels (2....N).

Another preferred embodiment is shown in figure 4. In this embodiment the circulator 12 is connected over a grating filter 11a with the variable delay line 1a. The tap 14a connects the second port of the circulator to the variable delay line 1a. The link contains an optical filter 13a for λ1 and λ2 the delay detector 3a and the control circuit 9a.

The next stage of the synchronizer with variable delay line 1 b is also connected over a tap to the second output line of the circulator 12. This stage contains an optical filter for the wavelengths λ2 and λ3. So every stage of the synchronizer synchronize two adjacent channels.

In another embodiment another filter structure for the optical filters is used. The filters filter λ1 and one additional wavelength out of the WDM. This filter design allows a synchronization of each channel with channel 1.

The synchronizer is used in an intensity/phase modulator in a regeneration stage of the transmission line. For this purpose a high quality band pass filter is used with Q>1000 to get an efficient clock recovery system and for exactly driving the modulator. The other channels can be synchronized using a cheaper low quality filter for example with Q =100.

The whole system is a feed back control loop with a high tolerance versus changes in the optical input power and versus dispersion effects. For the synchronizer is adjusting the delays between channels automatically a slight temperature shift on the fiber or a modification of the fiber birefringence and as a result the group velocity of the signal in a channel is leveled out.

**Claims**

1. Synchronizer for more than one optical RZ signal in a wavelength multiplex transmission system comprising

   • at least one variable delay line (1) with an input receiving RZ-WDM optical channels (2)

   • at least one delay controller (3) receiving the RZ-WDM output optical channels (10)

   • the delay controller generating a control signal depending on the power of the RZ-WDM output optical channels (10) and

   • a control circuit (9) to control the at least one delay line (1) in such a way that the optical WDM channels are synchronized.

2. Synchronizer according to claim 1, comprising a variable wavelength dependant delay line (1) for a subset of two RZ-WDM optical channels (1) the channels are separated by fiber grating reflectors (11).

3. Synchronizer according to claim 1, comprising a variable wavelength dependant delay line (1) for a subset of two RZ-WDM optical channels (1) the channels are separated by fiber grating reflectors (11) and optical filters.

4. Method for synchronization of RZ-WDM optical signals realized by the steps:

   • Separating two channels from the WDM multiplex

   • Synchronizing them by

   • Analyzing the power of the two channels

   • Generating a control signal for the variable delay line

   • Controlling the delay line

   • And feeding the resulting synchronized signals back to the next subset of channels so that the synchronized channels are one of the two channels of the subset.

5. Method for synchronization of RZ-WDM optical signals realized by the steps:

   • Separating two channels from the WDM multiplex with optical filters

   • Synchronizing them by

   • Analyzing the power of the two channels

   • Generating a control signal for the variable delay line

   • Controlling the delay line

   • And feeding the resulting synchronized signals back to the next subset of channels.

6. Method for synchronization of RZ-WDM optical signals according to claim 4 in a way that every channel is synchronized with channel 1.

7. Method for synchronization of RZ-WDM optical signals according to claim 4 in a way that the adjacent channels are synchronized.

# FIG_1

Power (a.u.)

- - - Pa=Pb
—— Pa=Pb/2

DT/Tbit

# FIG_2

Not synchronized channels

Synchronized channels

Variable delay line (wavelength dependent) — 1

Biais control system — 9

Decision circuit — 8

Delay detector — 3

HF powermeter

Bandpass filter

Photodetector

## FIG_3

Not synchronized
λ1, λ2λ3...

2

12

14a

11a

λ1

1a
Variable delay

14b

9a
Biais control circuit

3a
Delay detector

11b

λ2

1b
Variable delay

9b
Biais control circuit

3b
Delay detector

11c

λ3

Synchronized
λ1, λ2, λ3,...

10

## FIG_4

Not synchronized
λ1, λ2, λ3...

2

12

11a

λ1

1a
Variable delay

9a
Biais control circuit

11b

λ2

1b
Variable delay

9b
Biais control circuit

11c

λ3

14a

13a

λ1, λ2

3a
Delay detector

13b

14b

Synchronized
λ1, λ2, λ3,...

10

3b
Delay detector

EP 1 176 751 A1

## EUROPEAN SEARCH REPORT

**European Patent Office**

**Application Number**

EP 00 40 2145

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 982 963 A (FEINBERG JACK ET AL) 9 November 1999 (1999-11-09) | 1-3 | H04L7/00 H04B10/17 |
| A | * column 1, line 9 - line 23 * * column 1, line 45 - line 55 * * column 2, line 8 - line 47 * * column 4, line 48 - column 5, line 33; figures 1,2 * * column 6, line 9 - line 31; figure 4 * * column 8, line 17 - column 9, line 15; figures 10A,10B,10C,10D,10E * | 4-7 | |
| X | EP 0 936 773 A (CIT ALCATEL) 18 August 1999 (1999-08-18) * column 1, line 3 - line 41 * * column 1, line 58 - column 2, line 57 * * column 3, line 22 - line 56 * * column 4, line 13 - column 5, line 52; figure 1 * * column 6, line 13 - line 28 * * column 7, line 6 - line 43; figure 4 * | 1,4-7 | |
| X | EP 0 898 391 A (FUJITSU LTD) 24 February 1999 (1999-02-24) * page 2, line 8 - line 19 * * page 3, line 11 - line 24 * * page 6, line 20 - line 25; figures 3,4,13 * | 1,4 | TECHNICAL FIELDS SEARCHED (Int.Cl.7) H04B H04L H04J |

The present search report has been drawn up for all claims

| Place of search | Date of completion of the search | Examiner |
|---|---|---|
| THE HAGUE | 12 January 2001 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 40 2145

This annex lists the patent family members relating to the patent documents cited in the above–mentioned European search report.
The members are as contained in the European Patent Office EDP file on
The European Patent Office is in no way liable for these particulars which are merely given for the purpose of information.

12-01-2001

| Patent document cited in search report | | Publication date | Patent family member(s) | | Publication date |
|---|---|---|---|---|---|
| US 5982963 | A | 09-11-1999 | AU | 2086899 A | 05-07-1999 |
| | | | BR | 9813627 A | 21-11-2000 |
| | | | EP | 1040377 A | 04-10-2000 |
| | | | WO | 9931537 A | 24-06-1999 |
| EP 0936773 | A | 18-08-1999 | FR | 2774832 A | 13-08-1999 |
| | | | JP | 11317704 A | 16-11-1999 |
| EP 0898391 | A | 24-02-1999 | JP | 11068657 A | 09-03-1999 |
| | | | CN | 1209006 A | 24-02-1999 |
| | | | US | 6081360 A | 27-06-2000 |

EPO FORM P0459

For more details about this annex : see Official Journal of the European Patent Office, No. 12/82